# FASCICULE DE BREVET EUROPEEN

(11) **EP 0 461 987 B1**
(45) Date de publication et mention de la délivrance du brevet: **03.04.1996**
(21) Numéro de dépôt: 91401532.6
(22) Date de dépôt: 11.06.1991
(51) Int. Cl.: B60S 1/38

(54) **Balai-d'essuie-glace muni d'un arrêt de lame d'essuie-glace**
Scheibenwischerblatt das mit einer Scheibenwischerleistensperre ausgestattet ist
Windshield wiper blade provided with a windshield wiper strip lock

(30) Priorité: 14.06.1990 FR 9007399
(43) Date de publication de la demande: 18.12.1991
(73) Titulaire: VALEO SYSTEMES D'ESSUYAGE, F-78180 Montigny-Le-Bretonneux (FR)
(72) Inventeur: Oulie, Michel, F-63500 Issoire (FR)
(74) Mandataire: Gamonal, Didier

(56) Documents cités:
- EP-A- 0 158 070
- EP-A- 0 326 755
- FR-A- 2 215 048
- US-A- 2 782 443

## Description

La présente invention se rapporte à un balai d'essuie-glace pourvu d'un arrêt de lame d'essuie-glace.

Il est déjà connu, notamment par le document FR-A-1 563 454, de disposer d'un balai d'essuie-glace se composant d'un étrier principal aux extrémités duquel est articulé un système de palonniers apte à porter une lame d'essuie-glace.

Sur les extrémités libres des palonniers sont rapportées, par clipage, des griffes, en matière synthétique, de forme générale en "U" inversé enserrant la partie supérieure de la lame.

L'une des griffes, généralement celle située au voisinage de l'extrémité de la lame, présente un moyen d'immobilisation permettant de bloquer la lame par rapport à ladite griffe et cela dans la même direction et dans les deux sens.

Ce moyen d'immobilisation consiste, d'une part, en un clipage d'une protubérance portée par la griffe dans l'élément raidisseur porté par la lame et, d'autre part, en une immobilisation en translation de la lame par butée de son extrémité libre sur une paroi transversale portée par la griffe.

Ce type de balai d'essuie-glace présente l'inconvénient de nécessiter une opération d'usinage sur la partie supérieure de la lame d'essuie-glace permettant l'introduction de la protubérance à l'intérieur de cette partie supérieure et de prévoir une paroi transversale à la direction longitudinale de la lame d'essuie-glace, cette paroi transversale servant de butée en translation pour ladite lame.

Il est également connu par le document FR-A-2 215 048 un balai d'essuie-glace comportant une monture porteuse d'une lame d'essuyage par l'intermédiaire de griffes, ces griffes enserrant la partie supérieure de la lame avec une base et des flasques disposés respectivement en vis-à-vis du dos et des faces de la lame, cette lame étant immobilisée en translation par rapport à la monture par l'intermédiaire d'une pièce d'arrêt logée entre les flasques d'une griffe et ladite pièce d'arrêt coopérant, d'une part, avec une rainure transversale portée par la partie supérieure de la lame et, d'autre part, avec la griffe grâce à une ouverture prévue sur ladite pièce d'arrêt.

Ce balai présente le désavantage de nécessiter une rainure de forme et d'élaboration compliquées à l'intérieur de laquelle viendra se loger la pièce d'arrêt.

De plus, une fois l'assemblage des différents éléments réalisé, l'ensemble présentera un aspect peu esthétique dû à la présence visible de la pièce d'arrêt.

La présente invention propose un balai d'essuie-glace dans lequel l'immobilisation en translation de la lame d'essuie-glace par rapport au palonnier est réalisée de manière très simple tout en ne nuisant pas à l'esthétisme du balai d'essuie-glace.

Pour cela, le balai d'essuie-glace, notamment pour véhicule automobile, comportant une monture porteuse d'une lame d'essuyage par l'intermédiaire de griffes de pincement, ces griffes enserrant la partie supérieure de la lame avec une base et des flasques disposés respectivement en vis-à-vis du dos et des faces longitudinales de la lame, ladite lame étant immobilisée en translation par rapport à la monture par l'intermédiaire d'une pièce d'arrêt qui est logée entre les flasques d'au moins une griffe et qui coopère avec une rainure transversale portée par la partie supérieure de la lame et avec la griffe grâce à au moins une ouverture (Balai du type divulgué dans FR-A-2 215 048), est, selon l'invention, caractérisé en ce que ladite au moins une ouverture est portée par la base disposée en vis-à-vis du dos de la lame.

Grâce à l'invention, la pièce d'arrêt est, d'une part, masquée par les griffes de pincement et, d'autre part, cette pièce coopère uniquement avec les griffes et la lame, ce qui ne peut que rendre aisées les diverses manipulations de montage et réduire de ce fait le coût de fabrication.

Divers modes de réalisation de l'invention sont précisés dans les revendications 2 à 7 dépendantes.

Les autres caractéristiques et avantages de l'invention vont ressortir maintenant de la description qui va suivre donnée à titre d'exemple en se référant aux dessins annexés sur lesquels :
- la figure 1 est une vue partielle du balai d'essuie-glace selon l'invention ;
- la figure 2 est une vue en coupe selon la ligne A-A de la figure 1 ;
- la figure 3 est une vue de détail d'un des éléments de l'invention ;
- la figure 4 est une vue en perspective partielle montrant l'autre des éléments de l'invention ;
- la figure 5 est une vue en perspective montrant le troisième élément de l'invention.

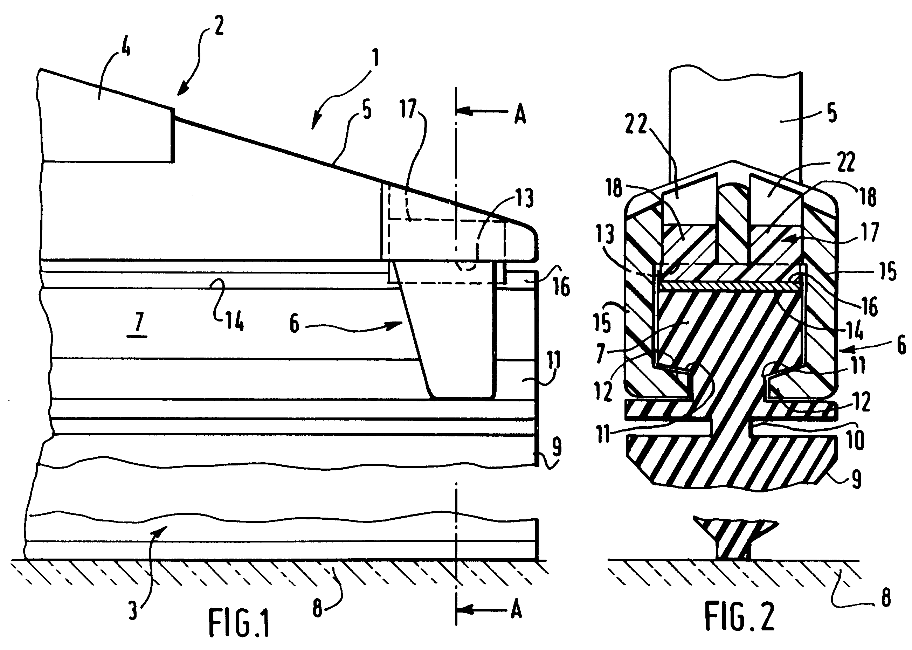

En se référant aux figures 1 et 2, un balai d'essuie-glace 1 est constitué, de manière connue en soi, d'une monture 2 porteuse d'une lame d'essuie-glace 3, la monture 2 pouvant être constituée d'un étrier principal 4 aux extrémités duquel est porté à articulation un système à palonniers constitué, dans le cas des figures concernées, par un étrier auxiliaire 5.

Ces étriers auxiliaires, également de manière connue en soi, présentent à leur extrémité libre des griffes de pincement 6 venant enserrer la partie supérieure 7 de la lame d'essuie-glace 3.

Comme mieux visible sur ces figures, la partie supérieure 7 se prolonge en direction d'une surface à essuyer 8 par un élément frotteur 9 relié à ladite partie supérieure 7 par une charnière 10, la partie supérieure 7, l'élément frotteur 9 et la charnière 10 étant une seule et unique pièce pouvant être élaborée par extrusion ou moulage.

De manière connue en soi, la partie supérieure 7 présente deux rainures longitudinales 11 aptes à recevoir les extrémités recourbées 12 des griffes de pincement 6.

Les griffes de pincement présentent, en section, une forme de "U" inversé dont la base 13 du "U" est disposée en vis-à-vis du dos 14 de la lame d'essuie-glace et dont les flasques 15 du "U" sont disposés en vis-à-vis des faces longitudinales de la partie supérieure 7, les extrémités recourbées 12 étant disposées au niveau des extrémités libres des flasques 15.

Dans les exemples représentés, un élément raidisseur 16 est rapporté sur le dos 14 de la lame de manière à rigidifier celle-ci lors du montage sur la monture porteuse 2.

Bien entendu, et cela sans sortir du cadre de l'invention, il peut être prévu que l'élément raidisseur 16 soit constitué, soit de deux tringles longitudinales disposées dans des rainures longitudinales prévues dans la partie supérieure 7, en laissant le dos 14 libre de toute entrave, soit de prévoir une tringle élastique enserrant la partie supérieure 7.

Pour immobiliser en translation la lame d'essuie-glace 3 par rapport à la monture porteuse 2, il est prévu de disposer une pièce d'arrêt 17 entre les flasques 15 des griffes 6, cette pièce d'arrêt 17 étant interposée entre la partie supérieure 7 de la lame 3 et la base 13 du "U" que présentent les griffes 6.

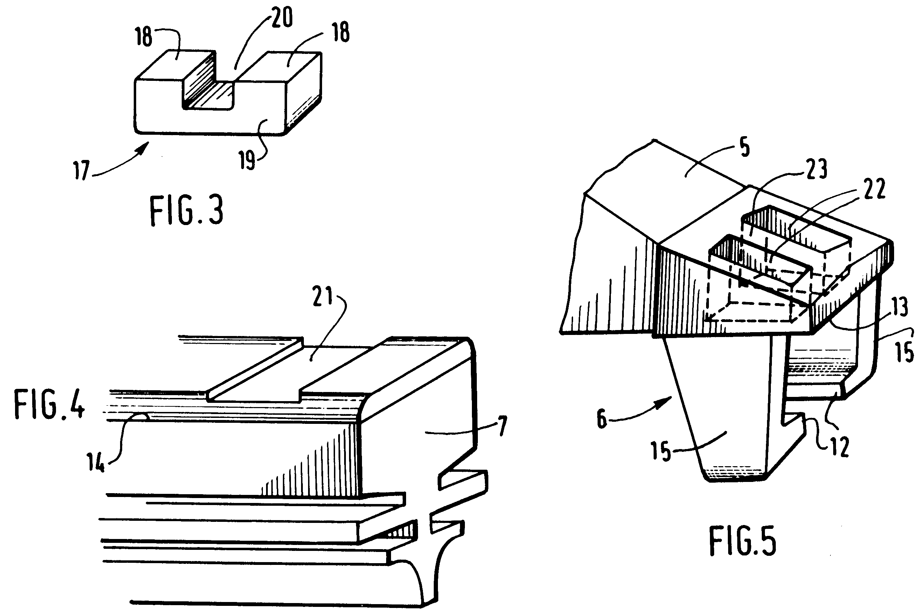

Comme mieux visible sur la figure 3, cette pièce d'arrêt 17 présente, en section, une forme de "U" à deux branches verticales 18 venant rejoindre une semelle 19 en laissant entre elles un évidement 20.

Comme précédemment décrite, cette pièce d'arrêt 17 est apte à être interposée entre la base 13 des griffes 6 et la partie supérieure 7 de la lame 3.

Comme mieux visible sur la figure 4, la partie supérieure 7 de la lame présente, plus particulièrement au niveau de son extrémité située en vis-à-vis de la base 13 de la griffe 6, une rainure 21 dont les dimensions longitudinales et transversales correspondent sensiblement aux dimensions longitudinales et transversales de la semelle 19 de la pièce d'arrêt 17.

Avantageusement, la profondeur de la rainure 21 peut être égale à l'épaisseur de la semelle 19 de la pièce d'arrêt 17, de manière à assurer un bon contact du dos de la lame avec la base 13 de la griffe.

Bien entendu, cette rainure 21 peut être prévue directement sur le dos 14 de la lame 3 dans le cas où il est envisagé que cette lame soit raidie par des tringles métalliques prévues dans des rainures longitudinales.

En se référant à la figure 5, la base 13 de la griffe 6 présente, orthogonalement, deux ouvertures 22 débouchant au-delà de la face opposée à la base 13 et disposées à distance l'une de l'autre, ouvertures dont la forme en section correspond sensiblement à la forme des branches 18 de la pièce d'arrêt 17 et dont la partie pleine 23, entre les deux ouvertures 22, correspond sensiblement, en direction transversale, à la dimension transversale de l'évidement 20 et sert de butée orthogonale à la pièce d'arrêt 17, de manière à limiter son déplacement.

Pour le montage et l'immobilisation en translation de la lame 3 par rapport à la monture porteuse 2, la pièce d'arrêt 17 est disposée entre les flasques 15 de la griffe 6 d'une manière telle que ses branches 18 viennent pénétrer dans les ouvertures 22 en laissant dépasser la semelle 19 au-delà de la base 13, jusqu'à ce que le fond de l'évidement 20 vienne en contact avec la partie de la base 13 de la griffe 6 délimitée par la partie pleine 23.

La lame d'essuie-glace 3 est ensuite enfilée sur les diverses griffes que porte la monture 2 par glissement des parties recourbées 12 des griffes le long des rainures 11, jusqu'à ce que la rainure 21 portée par la lame arrive au voisinage de la semelle 19 de la pièce d'arrêt 17.

En continuant le mouvement, la matière constitutive de la lame 3 se comprime, sous l'action de la semelle 19, entre cette rainure 21 et les rainures longitudinales 11 de manière à autoriser le glissement de la semelle 19 le long de son dos pour pouvoir ensuite venir pénétrer dans la rainure transversale 21, la pièce d'arrêt 17 se trouvant immobilisée orthogonalement entre la base 13 et la partie supérieure 7 par appui du fond de l'évidement 20 sur la partie pleine 23 et par appui de la face libre de la semelle 19 dans l'évidement 21.

Ainsi, la lame 3 est immobilisée en translation dans les deux sens par coopération, d'une part, de la semelle 19 de la pièce d'arrêt 17 avec la rainure 21 et, d'autre part, par coopération des branches 18 avec les ouvertures 22 prévues au niveau de la griffe 6.

La présente invention n'est pas limitée aux exemples de réalisation décrits mais englobe toutes variantes, tant qu'elles demeurent dans le cadre de l'invention telle que définie par les revendications.

Notamment, il peut être prévu que les ouvertures 22 soient une seule et unique ouverture non débouchante au-delà de la face opposée à la base 13 et que la pièce d'arrêt 17 présente, en lieu et place des branches 18 et de l'évidement 20, un prolongement de la semelle 19 qui soit de dimension et de forme complémentaires à cette semelle.

Dans ce cas, la butée orthogonale pour la pièce d'arrêt 17 est celle formée par le fond plein de la seule et unique ouverture non débouchante au-delà de la face opposée à la base 13 de la griffe 6.

## Revendications

1. Balai d'essuie-glace, notamment pour véhicule automobile, comportant une monture (2,4,5) porteuse d'une lame d'essuyage (3) par l'intermédiaire de griffes de pincement (6), ces griffes (6) enserrant la partie supérieure (7) de la lame (3) avec une base (13) et des flasques (15) disposés respectivement en vis-à-vis du dos (14) et des faces longitudinales de la lame (3), ladite lame étant immobilisée en translation par rapport à la monture (2,4,5) par l'intermédiaire d'une pièce d'arrêt (17) qui est logée entre les flasques (15) d'au moins une griffe (6) et qui coopère avec une rainure transversale (21) portée par la partie supérieure (7) de la lame (3) et avec la griffe (6) grâce à au moins une ouverture (22), caractérisé en ce que ladite au moins une ouverture (22) est portée par la base (13) disposée en vis-à-vis du dos (14) de la lame (3).

2. Balai d'essuie-glace selon la revendication 1, caractérisé en ce que la base (13) porte deux ouvertures (22) à distance l'une de l'autre.

3. Balai d'essuie-glace selon l'une des revendications précédentes, caractérisé en ce que la griffe (6) présente un moyen de butée orthogonale (23) pour la pièce d'arrêt (17).

4. Balai d'essuie-glace selon l'une des revendications précédentes, dans lequel la lame d'essuie-glace présente un élément raidisseur (16) porté sur son dos (14), caractérisé en ce que la rainure (21) est prévue sur l'élément raidisseur (16).

5. Balai d'essuie-glace selon l'une des revendications précédentes, caractérisé en ce que la pièce d'arrêt présente en section une forme de "U" à deux branches verticales (18) et à une semelle (19).

6. Balai d'essuie-glace selon l'une des revendications précédentes, caractérisé en ce que les branches (18) coopèrent avec deux ouvertures (22).

7. Balai d'essuie-glace selon l'une des revendications précédentes, caractérisé en ce que la semelle (19) coopére avec la rainure (21).

## Claims

1. A screen wiper blade, especially for a motor vehicle, comprising a carrier (2,4,5) carrying a wiping strip (3) by means of gripping jaws (6), the said jaws (6) enclosing the upper portion (7) of the strip (3) and having a base portion (13) and flat side portions (15) disposed respectively on either side of the spine portion (14) and longitudinal faces of the strip (3), the said strip being immobilised against linear movement with respect to the carrier (2,4,5) by means of an interposed stop member (17) which is mounted between the side elements (15) of at least one jaw (6), and which cooperates with a transverse groove (21) carried by the upper portion (7) of the strip (3), and with the jaw (6) by virtue of at least one opening (22), characterised in that the said at least one opening (22) is carried by the base portion (13) disposed in facing relationship with the spine portion (14) of the strip (3).

2. A screen wiper blade according to Claim 1, characterised in that the base portion (13) carries two openings (22) spaced apart from each other.

3. A screen wiper blade according to one of the preceding claims, characterised in that the jaw (6) has at least one orthogonal abutment means (23) for the stop member (17).

4. A screen wiper blade according to one of the preceding claims, in which the wiping strip has a stiffening element (16) carried on its spine portion (14), characterised in that the groove (21) is formed on the stiffening element (16).

5. A screen wiper blade according to one of the preceding claims, characterised in that the stop member has a U-shaped cross section having two vertical branches (18) and a base portion (19).

6. A screen wiper blade according to one of the preceding claims, characterised in that the branches (18) cooperate with two openings (22).

7. A screen wiper blade according to one of the preceding claims, characterised in that the base portion (19) cooperates with the groove (21).

## Patentansprüche

1. Scheibenwischerblatt, insbesondere für Kraftfahrzeuge, bestehend aus einer Halterung (2, 4, 5), an der durch Klemmkrallen (6) ein Wischgummi (3) befestigt ist, wobei diese Krallen (6) den oberen Teil (7) des Wischgummis (3) mit einem Sockelteil (13) und Seitenteilen (15) einspannen, die gegenüber dem Rückenteil (14) bzw. den Längsflächen des Wischgummis (3) angeordnet sind, wobei der besagte Wischgummi gegen eine Verschiebung im Verhältnis zur Halterung (2, 4, 5) durch ein Arretierstück (17) gesichert ist, das zwischen den seitenteilen (15) wenigstens einer Kralle (6) angeordnet ist und das mit einer Quernut (21), die sich am oberen Teil (7) des Wischgummis (3) befindet, und mit der Kralle (6) mittels wenigstens einer Öffnung (22) zusammenwirkt , **dadurch gekennzeichnet,** daß die besagte wenigstens eine Öffnung (22) an dem Sockelteil (13) vorgesehen ist, der gegenüber dem Rückenteil (14) des Wischgummis (3) angeordnet ist.

2. Scheibenwischerblatt nach Anspruch 1, **dadurch gekennzeichnet,** daß der Sockelteil (13) mit zwei Öffnungen (22) versehen ist, die in einem Abstand voneinander angeordnet sind.

3. Scheibenwischerblatt nach einem der vorangehenden Ansprüche, **dadurch gekennzeichnet**, daß die Kralle (6) ein rechtwinkliges Anschlagmittel (23) für das Arretierstück (17) aufweist.

4. Scheibenwischerblatt nach einem der vorangehenden Ansprüche, bei dem der Wischgummi ein Versteifungselement (16) aufweist, das an seinem Rückenteil (14) angeordnet ist, **dadurch gekennzeichnet**, daß die Nut (21) an dem Versteifungselement (16) vorgesehen ist.

5. Scheibenwischerblatt nach einem der vorangehenden Ansprüche, **dadurch gekennzeichnet**, daß das Arretierstück im Querschnitt eine "U"-Form mit zwei vertikalen Schenkeln (18) und einem Fußstück (19) aufweist.

6. Scheibenwischerblatt nach einem der vorangehenden Ansprüche, **dadurch gekennzeichnet**, daß die Schenkel (18) mit zwei Öffnungen (22) zusammenwirken.

7. Scheibenwischerblatt nach einem der vorangehenden Ansprüche, **dadurch gekennzeichnet**, daß das Fußstück (19) mit der Nut (21) zusammenwirkt.
